## Europäisches Patentamt

## European Patent Office

## Office européen des brevets

(19)

(11) Veröffentlichungsnummer: **0 027 171**

**A1**

(12) **EUROPÄISCHE PATENTANMELDUNG**

(21) Anmeldenummer: **80105125.1**

(22) Anmeldetag: **28.08.80**

(51) Int. Cl.³: **H 02 M 3/155**
**H 02 P 13/32**

(30) Priorität: **10.09.79 DE 2936464**

(43) Veröffentlichungstag der Anmeldung:
**22.04.81 Patentblatt 81/16**

(84) Benannte Vertragsstaaten:
**BE CH FR GB IT LI NL SE**

(71) Anmelder: **SIEMENS AKTIENGESELLSCHAFT Berlin
und München
Postfach 22 02 61
D-8000 München 22(DE)**

(72) Erfinder: **Schierjott, Rudolf, Ing.grad.
Blumenstrasse 3
D-8034 Germering(DE)**

(54) Durchfluss-Gleichstromumrichter.

(57) Der Durchfluß-Gleichstromumrichter weist als einziges
magnetisches Bauelement einen Übertrager (TR) auf. Die
ansonsten übliche, zusätzlich speichernde Induktivität entfällt. Ein im Primärkreis des Übertragers (TR) angeordneter,
von einem Regler (R) gesteuerter Schalttransistor (T) erzeugt
im leitenden Zustand einen vom Eingang ($U_E$) zum Ausgang
($U_A$) des Umrichters fließenden, linear ansteigenden Strom.
Im gesperrten Zustand des Schalttransistors (T) fließt ein entsprechend dem Übersetzungsverhältnis des Übertragers (TR)
transformierter Strom über die Sekundärwicklung mit nachgeschalteter Freilaufdiode (V) zum Ausgang ($U_A$).

FIG 3

EP 0 027 171 A1

SIEMENS AKTIENGESELLSCHAFT     Unser Zeichen:
Berlin und München            VPA    79 P 2 3 8 4 EUR

Durchfluß-Gleichstromumrichter.
------------------------------------

Die Erfindung betrifft einen Durchfluß-Gleichstromumrichter mit mindestens einem periodisch schaltenden
Schalttransistor, sowie einem Transformator, dessen
Primärwicklung im Kollektorkreis des Schalttransistors
liegt und an dessen Sekundärwicklung über Gleichrichter
zumindest eine stabilisierte Gleichspannung abnehmbar
ist, wobei ein Regelkreis den Schalttransistor über seinen
Basiskreis im Sinne einer Gleichspannungsstabilisierung
beeinflußt.

Zur Umwandlung einer ungeregelten ungesiebten Gleichspannung in eine niedrigere geregelte und gesiebte
Gleichspannung als Stromversorgung für elektronische
Geräte ist es bekannt, Durchflußumrichter mit Übertrager
zu verwenden. Derartige Durchflußumrichter weisen als
Schalter einen Schalttransistor auf und als Energie-

MM 1 Wt

speicher ist im Ausgangskreis des Übertragers eine Induktivität angeordnet. Der Schalttransistor speist im eingeschalteten Zustand Strom über die Induktivität zum Ausgang. Gleichzeitig wird dabei Energie in der Induktivität gespeichert, die im abgeschalteten Zustand des Schalttransistors über die Freilaufdiode an den Ausgang abgegeben wird. Die Regelung der Ausgangsspannung geschieht bei derartigen Durchflußumrichtern über das Tastverhältnis des Schalttransistors.

Ungünstig bei derartigen Anordnungen ist neben der Verwendung zweier teueren magnetischen Bauteile, wie es die Induktivitäten darstellen, noch die sehr schwierige Ansteuerung des Schalttransistors. Der Schalttransistor muß zum verlustarmen und damit schnellen Sperren mit einer zusätzlichen negativen Vorspannung an seiner Basis versorgt werden, die zusätzlich erzeugt werden muß.

Aufgabe der Erfindung ist es, im Rahmen der Stromversorgung für elektronische Geräte oder dergleichen einen Gleichstromumrichter bereitzustellen, der einfach und kostengünstig hergestellt werden kann und der eine möglichst geringe Anzahl von magnetischen Bauelementen aufweist. Ein derartiger Gleichstromumrichter soll bei hohem Wirkungsgrad leicht anzusteuern sein.

Diese Aufgabe wird gemäß der Erfindung dadurch gelöst, daß der Transformator als einziges magnetisches Bauelement vorgesehen ist, der sowohl die energieübertragenden als auch die energiespeichernden Funktionen des Gleichstromumrichters beinhaltet und der derart angeordnet ist, daß im leitenden Zustand des Schalttransistors über die Primärwicklung des Transformators ein linear ansteigender Strom vom Eingang zum Ausgang des Gleichstromumrichters fließt, und daß im gesperrten Zustand des Schalttransistors über die Sekundärwicklung zum Ausgang ein entsprechend dem Übersetzungsverhältnis des Transformators transformierter linear abfallender Strom über eine Diode zum Ausgang fließt.

Bei einer besonderen Ausführungsform der Erfindung steht die Primärwicklung des Transformators über den Kollektor-Emitterkreis des Schalttransistors mit dem Potential führenden Ausgang der Schaltungsanordnung in Verbindung und die Sekundärwicklung des Transformators einerseits mit diesem Potential führenden Ausgang und andererseits über einen Gleichrichter mit dem nicht Potential führenden Ausgang.

Der erfindungsgemäße Durchflußumrichter benötigt nur ein magnetisches Bauteil, nämlich einen Übertrager. Dadurch kann der Tastgrad der Ansteuerung mittels dem Übersetzungsverhältnis des Übertragers frei gewählt werden. Dies bedingt auch bei großer Eingangs-Ausgangsspannungsdifferenz einen niedrigen Kollektorstrom im Schalttransistor und damit ist eine optimale Ansteuerung des Schalttransistors ohne zusätzliche Hilfsspannung möglich. Die Schaltverluste im Schalttransistor sind gering und der Schalttransistor selber kann als NPN-Transistor ausgeführt sein. Da die Sperrspannung der im Ausgangskreis des Übertragers angeordneten Diode kleiner als die Eingangsspannung sein kann, ist die Verwendung einer niedrig sperrenden Diode (Schotthy-Diode) möglich. Auch bei einer ungünstigen Dimensionierung bleibt der Wirkungsgrad des Gleichstromumrichters größer als 90 %.

Eine Ausführungsform der Erfindung ist in den Zeichnungen dargestellt und wird im folgenden beispielsweise näher beschrieben.

Es zeigen
Fig. 1  ein Schaltbild eines bekannten Durchflußumrichters mit Übertrager,
Fig. 2  ein Blockschaltbild des erfindungsgemäßen Durchflußumrichters und
Fig. 3  ein Schaltbild des erfindungsgemäßen Durchflußumrichters mit einem vorteilhaften Ausführungsbeispiel des Regelkreises.

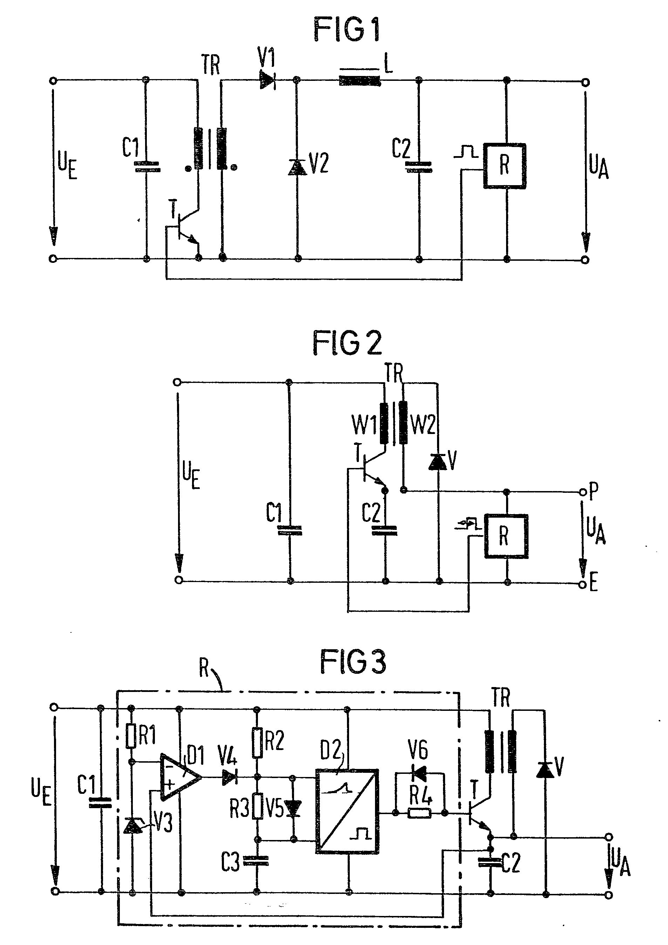

Bei dem in Fig. 1 dargestellten bekannten Durchflußumrichter mit Übertrager wird eine ungeregelte Eingangsspannung UE in eine niedrige geregelte Ausgangsspannung UA umgewandelt. Er besteht dabei aus einem Übertrager TR, der über einen in seinem Eingangskreis angeordneten Schalttransistor T angesteuert wird. Angesteuert wird dieser Schalttransistor T über eine Regelschaltung R, die in Abhängigkeit von einer Regelabweichung den Schalttransistor T ein- und ausschaltet. Im eingeschalteten Zustand des Schalttransistors T fließt bedingt durch die an einem Kondensator C1 anliegende Eingangsspannung UE ein Strom durch die Primärwicklung des Übertragers TR. Dieser lädt über die Sekundärwicklung des Transformators TR und eine Diode V1 eine nachgeschaltete Drossel L. Im geöffneten Zustand des Schalttransistors T entlädt sich diese Drossel L und erzeugt über die Diode V2 einen Ausgangsstrom. Die Glättung des Stromes erfolgt dabei über einen im Ausgang angeordneten Kondensator C2.

Bei dem in der Fig.2 dargestellten erfindungsgemäßen Durchflußumrichters ist nur ein magnetisches Bauteil, nämlich der Übertrager TR, angeordnet. Die Eingangswicklung des Übertragers W1 stellt über den Schalttransistor T mit dem Potential führenden Ausgang P des Ausganges UA des Durchflußumrichters in Verbindung. Die Sekundärwicklung W2 ist einerseits mit dem Potential führenden Ausgang P, andererseits über eine als Schotthy-Diode ausgebildete Freilaufdiode V mit dem potentialfreien Ausgang E verbunden. Die Funktion des Durchflußumrichters ist dabei wie folgt: Wird der Transistor T über den Regler, der im Prinzip entsprechend dem Regler R des Durchflußumrichters der Fig.1 ausgebildet ist, wegen der mangelnden Notwendigkeit eine negative Hilfsspannung für den Transistor T bereitzustellen aber einfacher sein kann, leitend geschaltet, fließt ein linear ansteigender Strom vom Eingang UE über die Wicklung W1 zum Ausgang P. Damit wird der Übertrager TR entsprechend seinen Wicklungen W1 und W2 mit Energie geladen. Wird nun der Schalttransistor T gesperrt, so fließt ein mit dem Übersetzungsverhältnis ü des Übertragers TR transformierter Strom linear abfallend über die Freilaufdiode V zum Ausgang E. Die Regelung der Ausgangsspannung erfolgt dabei durch Variation des Tastverhältnisses. Die Glättung der Ausgangsspannung erfolgt durch den Kondensator zwischen Ausgangspotential P und E.

Zur Ansteuerung des Schalttransistors in einem Durchflußumrichter der eingangs genannten Art sind verschiedene Regelschaltungen bekannt. Besonders vorteilhaft ist die in der Fig.3 dargestellte erfindungsgemäße Regelschaltung R, die gute Regeleigenschaften mit geringem Aufwand verbindet.

Sie besteht aus einem Regelverstärker D1, der die am Ausgangskondensator C2 anliegende Ausgangsspannung UA mit einer an einer Zenerdiode V3 anliegenden Spannung vergleicht.

Diese Zenerdiode V3 steht über einen Widerstand R1 mit dem Eingang in Verbindung. Ausgangsseitig ist der Regelverstärker D1,über eine Diode V4 einem Spannungsteiler aus den Widerständen R2, R3, einem Speicherkondensator C3 und einer weiteren Diode V5 mit einem TIMER-Baustein D2 in Verbindung. Dieser bekannte Baustein D2 ist im Prinzip ein Schwellwertschalter, der in Abhängigkeit von am Eingang anliegenden Spannungen Rechteckimpulse liefert, die über einen Widerstand R4 mit parallel geschalteter Diode V6 dem Schalttransistor T zugeführt werden.

Die Funktion einer derartigen Regelschaltung R ist wie folgt: Der Regelverstärker D1 vergleicht die Spannung V3 mit der Ausgangsspannung an C2 und stellt seinen Ausgang so ein, daß der Kondensator C3 über die Diode V4 und V5 mehr oder weniger rasch aufgeladen wird. Die Zeitkonstante für den Auf- und Entladevorgang wird dabei bestimmt durch das Verhältnis der Widerstände R2, R3 und des Kondensators C3. Der Widerstand R2 bestimmt dabei die Aufladezeit, der Widerstand R3 die Entladezeit. Während der Aufladezeit des Kondensators C3 liegt der Ausgang des TIMER-Bausteines D2 auf hohem Potential, womit der Transistor T über den Widerstand R4 mit Basisstrom versorgt wird. Hat die Spannung an dem Kondensator C3 zwei Drittel der Eingangsspannung E erreicht, schaltet der Schwellwertschalter D2 auf Nullpotential, womit der Transistor T durch Umpolen der Basisspannung über die Diode V6 abgeschaltet wird.

Gleichzeitig wird der Kondensator C3 über den Widerstand R3 entladen und der Ausgang des Schwellwertschalters D2 stellt sich wieder auf höheres Potential, sobald die Spannung an dem Kondensator C3 ein Drittel des Wertes der Spannung am Eingang UE unterschreitet. Hierauf wird der Kondensator C3 erneut aufgeladen und der Vorgang wiederholt sich periodisch. Da die Aufladezeit des Kondensators C3 in Abhängigkeit von dem Ausgangsstrom des Regelverstärkers D1 variiert, die Endladezeit aber bedingt durch den Widerstand R3 konstant ist, arbeitet die Schaltung mit fester Pausenzeit und variabler Pulszeit des Transistors T. Die maximale Impulszeit wird dabei durch den Widerstand R2 begrenzt.

Patentansprüche:

1. Durchfluß-Gleichstromumrichter mit mindestens einem periodisch schaltenden Schalttransistor sowie einem Transformator, dessen Primärwicklung im Kollektorkreis des Schalttransistors liegt und an dessen Sekundärwicklung über Gleichrichter zumindest eine stabilisierte Gleichspannung abnehmbar ist, wobei ein Regelkreis den Schalttransistor über seinen Basisstromkreis im Sinne einer Gleichspannungsstabilisierung beeinflußt, d a d u r c h   g e k e n n z e i c h n e t, daß der Transformator (Tr) als einziges magnetisches Bauelement vorgesehen ist, der sowohl die energieübertragenden als auch die energiespeichernden Funktionen des Gleichstromumrichters beinhaltet, und derart angeordnet ist, daß im leitenden Zustand des Schalttransistors (T) über die Primärwicklung des Transformators (T1) ein linear ansteigender Strom vom Eingang zum Ausgang des Gleichstromumrichters fließt, und daß im gesperrten Zustand des Schalttransistors (T) über die Sekundärwicklung (W2) zum Ausgang ein entsprechend dem Übersetzungsverhältnis (ü) des Transformators (Tr) transformierter, linear abfallender Strom über eine Diode (V) fließt.

2. Gleichstromumrichter nach Anspruch 1, dadurch gekennzeichnet, daß die Primärwicklung (W1) des Transformators über den Kollektor-Emitterkreis des Schalttransistors (T) mit dem potentialführenden Ausgang (P) der Schaltungsanordnung in Verbindung steht, und daß die Sekundärwicklung (W2) des Transformators (Tr) einerseits mit diesem Potential führenden Ausgang (P), andererseits über eine Diode (V) mit dem potentialfreien Ausgang (E) in Verbindung steht.

3. Gleichstromumrichter nach einem der Ansprüche 1
oder 2, g e k e n n z e i c h n e t durch einen
Regelkreis (R) mit einem Regelverstärker (D1), dessen
Ausgangssignal über Diode (V4, V5) einem Kondensator
(D3) zugeführt wird und einem mit dem Kondensator (C3)
verbundenen Schwellwertschalter (D2), der bei einem
dem Ladezustand des Kondensators (C3) entsprechenden
Schwelle den Kondensator (C3) über einen Widerstand (R3)
entlädt und nach Erreichen einer dem Entladezustand
entsprechenden Schwelle den Kondensator (C3) über das
Ausgangssignal des Regelverstärkers (D1) erneut auflädt
und der in Abhängigkeit von diesen Schwellen den Schalttransistor (T) ansteuernde Ausgangssignale erzeugt.

0027171

1/1

FIG 1

FIG 2

FIG 3

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 532 045 (SANKEN ELECTRIC CO. LTD.) <br> * Seite 4, vorletzter Absatz bis Seite 6, Absatz 1; Seite 13, Absatz 2 bis Seite 14, Absatz 2; Fig. 4 * <br> -- | 1-3 |
| X | US - A - 3 959 716 (G.B. GILBERT, JR. et al.) <br> * Spalte 1, Zeile 46 und folgende * <br> -- | 1-3 |
| | US - A - 3 378 758 (T.C. GOODENOW) <br> * Spalte 3, Zeile 42 und folgende * <br> -- | 3 |
| A | US - A - 4 068 158 (J.E. HICKS et al.) <br> * Fig. 1 * <br> ---- | |

**KLASSIFIKATION DER ANMELDUNG (Int. Cl.³)**

H 02 M    3/155
H 02 P    13/32

**RECHERCHIERTE SACHGEBIETE (Int. Cl.³)**

H 02 M    3/00
H 02 M    7/42
H 02 P    13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | |
|---|---|
| X | Der vorliegende Recherchenbericht wurde für alle Patentansprüche erstellt. |

| Recherchenort | Abschlußdatum der Recherche | Prüfer |
|---|---|---|
| Berlin | 16-01-1981 | GESSNER |

EPA form 1503.1   08.78